Europäisches Patentamt

European Patent Office

Office européen des brevets

(19)

(11) Veröffentlichungsnummer: **0 343 518**

**A1**

(12)

# EUROPÄISCHE PATENTANMELDUNG

(21) Anmeldenummer: 89108979.9

(22) Anmeldetag: 18.05.89

(51) Int. Cl.⁴: **B60P 1/36**

(30) Priorität: 26.05.88 DE 3817887

(43) Veröffentlichungstag der Anmeldung:
29.11.89 Patentblatt 89/48

(84) Benannte Vertragsstaaten:
BE ES FR GB IT NL SE

(71) Anmelder: Paul Klöckner GmbH
Hirtscheider Strasse 13 Postfach 90
D-5239 Nistertal(DE)

(72) Erfinder: Haffer, Dieter, Dr.-Ing.
Am Sonnenhang 2
D-5414 Vallendar(DE)

(74) Vertreter: Patentanwälte Grünecker,
Kinkeldey, Stockmair & Partner
Maximilianstrasse 58
D-8000 München 22(DE)

(54) Vorrichtung zum Be- und Entladen von Stückgütern.

(57) Die Erfindung betrifft eine Vorrichtung zum Be-
und Entladen von Stückgütern, insbesondere für
Lastkraftwagen, mit einem sich auf einem Ladeboden (1) abstützenden Ladegurt (2), mit wenigstens
einer Wickeltrommel (3) zum Aufwickeln des Ladegurts (2) und mit Antriebseinrichtungen zum Verschieben des Ladegurts (2) über den Ladeboden (1)
in der Be- und Entladerichtung. Der Erfindung liegt
die Aufgabe zugrunde, eine Be- und Entladevorrichtung insbesondere für den Einbau in Lastkraftwagen
zu schaffen, durch die die optimale Nutzung des
gesetzlich möglichen Transportraums von Lastkraftwagen möglich ist. Erfindungsgemäß wird diese Aufgabe gelöst, indem der Ladegurt (2) in wenigstens
zwei im Abstand voneinander verlaufende Teillängsgurte (2a',2a'',2a''') unterteilt ist, und die Antriebseinrichtung für die Trommel (3) zum Aufwickeln des
Ladegurts (2) von außen wenigstens in einem freien
Bereich zwischen zwei Teillängsgurten (2a',2a'',2a''')
an der Trommel (3) angreift. Durch diese erfindungsgemäße Lösung können die Breite des Transportraums einschränkende seitliche Außenantriebe an
der Trommel entfallen.

FIG.1

## Vorrichtung zum Be- und Entladen von Stückgütern

Die Erfindung betrifft eine Vorrichtung zum Be- und Entladen von Stückgütern, insbesondere für Lastkraftwagen, mit einem sich auf einem Ladeboden abstützenden Ladegurt, mit wenigstens einer Trommel zum Aufwickeln des Ladegurts und mit Antriebseinrichtungen zum Verschieben des Ladegurts über den Ladeboden in der Be- und Entladerichtung.

Beim Einbau von Be- und Entladevorrichtungen in Fahrzeuge für den Lastentransport ergeben sich dadurch besondere technische Probleme, daß die Breite, Länge und Höhe solcher Fahrzeuge in den einzelnen Ländern durch gesetzliche Bestimmungen festgelegt ist. Es ist deshalb das Bestreben, den nach den gesetzlichen Vorschriften möglichen Laderaum optimal zu nutzen. Beim Einbau von Be- und Entladevorrichtungen in Lastkraftwagen sollen sich also möglichst keine Einschränkungen in bezug auf die maximal transportierbare Last ergeben.

Eine bekannte Be- und Entladevorrichtung, durch die die Aufgabe gelöst ist, die Ladefläche von Fahrzeugen für den Lasttransport im Rahmen gesetzlich festgelegter Außenabmessungen ohne Beschränkungen in bezug auf die maximal transportierbare Nutzlast ausbilden zu können, weist jeweils zwei im Innern einer Be- und Entladetrommel zum Aufwickeln des Ladegurts angeordnete, in einem zylindrichen Gehäuse untergebrachte und mit diesem fest verbundene Hydromotoren und Getriebe zum Antrieb der Trommeln auf. Durch diese Lösung wird erreicht, daß die Ladefläche des Fahrzeugbodens optimal genutzt wird und praktisch mit der Oberfläche des Fahrzeugbodens zusammenfällt, indem kein Einbauraum für den seitlichen Außenantrieb der Wickeltrommeln benötigt wird. Dadurch ist es unter den Einschränkungen durch die Straßenverkehrs-Vorschriften möglich, Stückgüter zu transportieren, die z.B. auf zwei oder drei nebeneinander quer zur Be- bzw. Entladerichtung auf einem solchen Fahrzeugboden untergebrachten Europaletten gelagert sind.

Ein wesentlicher Nachteil dieser bekannten Lösung für eine Be- und Entladevorrichtung besteht in dem hohen Kosten- und Arbeitsaufwand, der mit dem Einbau von insgesamt vier Hydromotoren und jeweils einem mit einem Hydromotor verbundenen Getriebe verbunden ist.

Es ist die Aufgabe der Erfindung, eine Be- und Entladevorrichtung der eingangs erwähnten Art zu schaffen, die bei merklich verringertem Fertigungs- und Installationsaufwand wenigstens die gleichen Vorteile in bezug auf die optimale Nutzung des gesetzlich möglichen Transportraums von Lastkraftwagen aufweist.

Diese Aufgabe wird erfindungsgemäß gelöst, indem der Ladegurt in wenigstens zwei im Abstand voneinander verlaufende Teillängsgurte unterteilt ist, und daß die Antriebseinrichtung für die Trommel zum Aufwickeln des Ladegurts von außen wenigstens in einem freien Bereich zwischen zwei Teillängsgurten an der Trommel angreift.

Durch diese erfindungsgemäße Lösung fallen die beim Einbau in eine Wickeltrommel, deren Durchmesser nun vorteilhaft verkleinert werden kann, gegebenen maßlichen Beschränkungen weg. Dadurch braucht nur ein einziger Motor, vorzugsweise ein Hydromotor, mit nur einem einzigen Getriebe oder sogar ohne ein Getriebe, eingesetzt zu werden, wodurch der Kosten- und Arbeitsaufwand für den Einbau von jeweils zwei Hydromotoren und zwei Getrieben in eine Wickeltrommel unterschreitbar ist. Da das Antriebsmoment an der Wickeltrommel zwischen den Trommelenden angreift, ergeben sich keine Einschränkungen der maximal nutzbaren Ladebreite durch Platzbedarf für seitliche Außenantriebe.

Besonders hinsichtlich der Beförderung von Stückgut auf Europaletten ist es vorteilhaft, zur Anpassung an die Auflageflächen der Paletten eine Dreiteilung des Ladegurts mit einem breiten Teillängsgurt in der Mitte und zwei schmalen, in der Breite gleichen, seitlichen Teillängsgurten vorzusehen.

Von Vorteil ist es auch, wenn der Ladegurt über wenigstens eine Umlenkwalze, wodurch zweckmäßig eine Ladekante gebildet wird, geführt ist. Die Umlenkwalze kann zur exakten Führung der Teillängsgurte beitragen, indem jeweils im Bereich zwischen zwei Teillängsgurten der Walzendurchmesser vergrößert ist.

Die Bewegung des Ladegurts in zwei Richtungen, jeweils eine für die Be- und eine für die Entladung kann durch eine zweite Trommel zum Aufwickeln des Ladegurts entgegen der Wickelrichtung der anderen Trommel gewährleistet werden.

In besonders zweckmäßiger Ausgestaltung der Erfindung kann zur Bewegung des Ladegurts in der Beladerichtung wenigstens eine Seiltrommel zum Aufwickeln von wenigstens einem Seil vorgesehen werden, das über einen Gurtbalken mit den nicht aufgewickelten Enden der Teillängsgurte verbunden ist.

Durch Einbau von Seilzügen, die an der Unterseite von Lastkraftwagen, z.B. in der Nähe der Längsträger, über Umlenkrollen zurückführbar sind, läßt sich für die Bewegung des Ladegurts in Be- und Entladerichtung eine kompakte, vorzugsweise in Hecknähe eines Lastkraftwagens unter dem Ladeboden angeordnete Antriebseinheit mit wenigstens einer Seiltrommel, mit einem Motor mit Getriebe, sowie mit der Trommel zum Aufwickeln des Ladegurts in Entladerichtung ausbilden, wobei das Getriebe verstellbar und wahlweise mit der Seiltrommel oder der Wickeltrommel verbindbar ist. Bei Ausbildung einer solchen kompakten Antriebseinheit kommt man mit insgesamt nur einem Antriebsmotor und nur einem Getriebe aus, so daß sich die Be- und Entladevorrichtung besonders kostengünstig installieren läßt.

Eine weitere zweckmäßige Ausgestaltung der Erfindung besteht darin, daß der Ladeboden für das Stückgut wenigstens an einem Ende einen vertikal schwenkbaren Bereich zur Anpassung an unterschiedliche Ladehöhen aufweist. Es ist auch möglich, den Ladeboden auf einen innerbetrieblichen Transportwagen zu installieren.

Weitere Ausgestaltungsmöglichkeiten der Erfindung gehen aus den Unteransprüchen hervor.

Die Erfindung soll im folgenden anhand von Ausführungsbeispielen und der beiliegenden Zeichnungen weiter erläutert und beschrieben werden. Es zeigen:

Fig.1 ein Ausführungsbeispiel für eine erfindungsgemäße Be- und Entladevorrichtung mit zwei Wickeltrommeln,

Fig. 2 ein Ausführungsbeispiel für eine erfindungsgemäße Umlenkwalze zur Führung des Ladegurts,

Fig. 3 schematisch ein Ausführungsbeispiel für eine erfindungsgemäße Be- und Entladevorrichtung mit einer kompakten Antriebseinheit für die Bewegung des Ladegurts in Be- und Entladerichtung,

Fig. 4 ein Ausführungsbeispiel für eine erfindungsgemäße Be- und Entladevorrichtung, die stationär mit einer Laderampe verbunden ist, und

Fig. 5 ein Ausführungsbeispiel für eine erfindungsgemäße Be- und Entladevorrichtung, die verfahrbar mit einem Transportwagen verbunden ist.

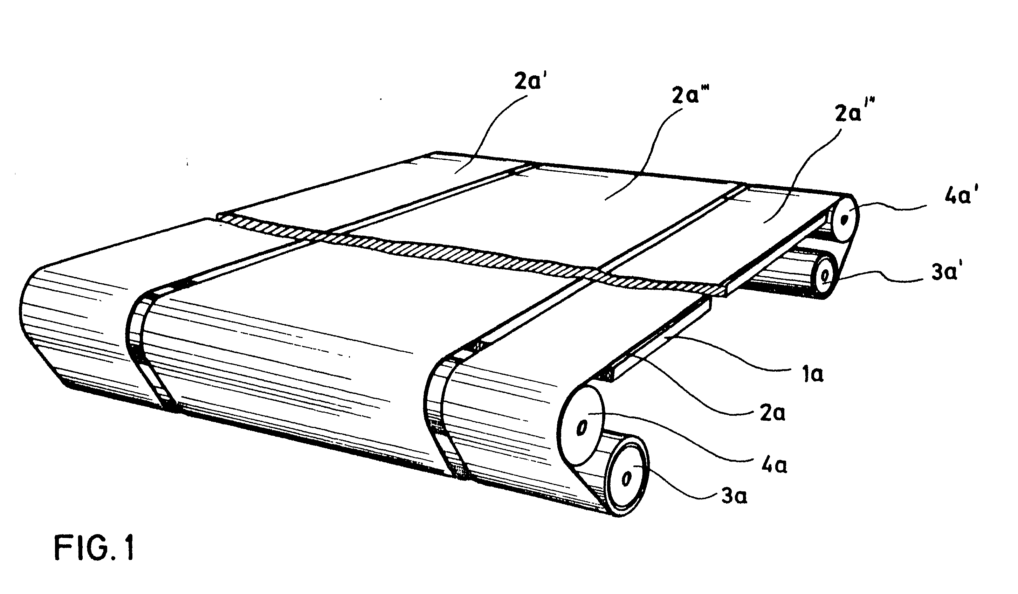

In Fig. 1 ist mit dem Bezugszeichen 1a der Ladeboden bezeichnet, auf dem der Ladegurt 2a, der aus den Teillängsgurten 2a', 2a" und 2a"' besteht, abgestützt ist. Der dreigeteilte Ladegurt 2a ist über die Umlenkwalzen 4a, 4a' geführt, von denen z.B. eine die Ladekante am Heck eines Lastkraftwagens bilden könnte. Der Ladegurt ist durch die beiden Trommeln 3a, 3a' in der Ent- bzw. Beladerichtung aufwickelbar. Für den Antrieb der Trommeln kann jeweils ein an den Enden des Ladebodens unter dem Ladeboden angeordneter Motor, oder ein einziger unter dem Ladeboden angeordneter Motor, mit einem Getriebe vorgesehen werden, wobei die Drehmomentübertragung auf die Trommeln im Bereich von einem oder beiden der durch die Abstände zwischen den Teillängsgurten gebildeten Zwischenräume erfolgt. Durch symmetrisch in beiden Bereichen angreifende Drehmomente werden die Trommeln und deren Lagerung mechanisch weniger beansprucht. Durch die beschriebene Art der Drehmomentübertragung von außen im Bereich zwischen den Trommelenden kann bei Einbau der Be- und Entladevorrichtung in Lastkraftwagen die gesetzlich zulässige Gesamtbreite des Fahrzeugs optimal für die Ausbildung einer möglichst breiten Ladefläche genutzt werden.

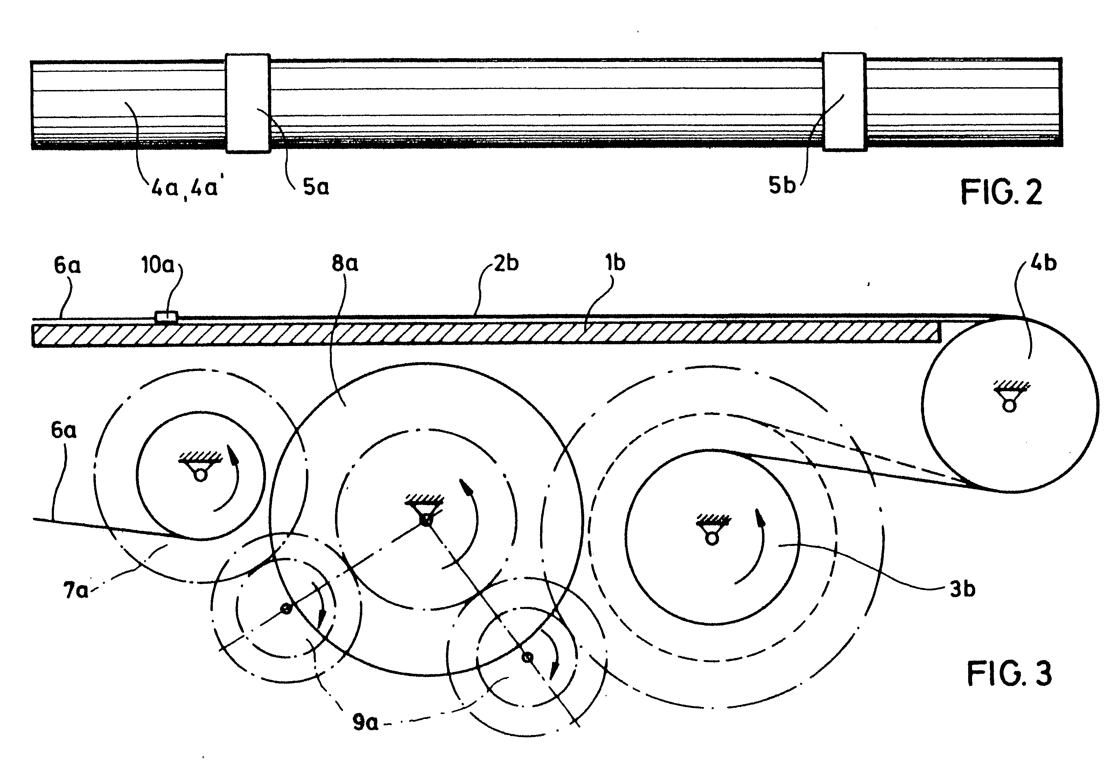

Aus der Fig. 2 ist zu entnehmen, daß der Durchmesser der Umlenkwalzen in den Bereichen 5a und 5b der Zwischenräume zwischen den Teillängsgurten vergrößert ist. Durch die Bunde 5a und 5b wird eine Führung der Teillängsgurte erreicht. Die Durchmesservergrößerung erfolgt zweckmäßig jedoch nicht soweit, daß die Bunde über den anliegenden Ladegurt hinaus vorstehen.

Die aus der Fig. 2 entnehmbaren Relationen für die Breiten der Teillängsgurte entsprechen einer Be- und Entladevorrichtung, die an die Auflageflächen von zwei oder drei in Lade- bzw. Entladerichtung nebeneinander angeordneten Europaletten angepaßt ist, d.h. die Paletten besitzen im Bereich der Zwischenräume zwischen den Teillängsträgern weder bei Quer- noch bei Längsanordnung der Paletten Auflageflächen, oder die Auflageflächen stehen nur geringfügig über den Rand der Teillängsgurte in diese Bereiche hinein.

Bei Beförderung von Paletten mit einer anderen Struktur der Auflageflächen könnte eine andere dieser Struktur angepaßte Breitenaufteilung der Teillängsgurte vorgesehen werden.

Bei dem in der Fig. 3 dargestellten Ausführungsbeispiel erfolgt die Bewegung des durch den Ladeboden 1b abgestützten Ladegurts 2b in Entladerichtung durch Aufwicklung auf die Trommel 3b, wobei der Ladegurt 2b über die eine Ladekante bildende Umlenkwalze 4b geführt ist. In Beladerichtung erfolgt die Bewegung des Ladegurts 2b durch wenigstens ein Zugseil 6a, das auf der Seiltrommel 7a aufgewickelt und unter dem Ladeboden vom hinteren Ende des Ladebodens durch wenigstens eine (nicht dargestellte) Umlenkrolle zurückgeführt ist. Das Seil 6a ist über den das freie Ende des Ladegurts verstärkenden Gurtbalken 10a, der auch als vertikales Gestell, an dem die Stückgutladung anschlägt, ausgebildet sein könnte, mit den Enden der Teillängsgurte verbunden. Es ist besonders zweckmäßig, zwei symmetrisch am Gurtbalken angreifende Zugseile vorzusehen.

Für derartige Seilzüge bestehen am Unterboden von Lastkraftwagen ohne weiteres Einbaumöglichkeiten, z.B. nahe der Längsträger des Fahrgestells, so daß die gesamte Antriebseinrichtung mit der Seiltrommel 7a, dem Antriebsmotor 8a, dem Getriebe 9a sowie der Wickeltrommel 3b als kompakte Baueinheit unter dem Ladeboden in Hecknähe des Lastkraftwagens angeordnet werden kann.

Zur besseren Verdeutlichung sind der Antriebsmotor 8a und die Wickeltrommel 3b gegenüber dem der Fig. 3 zugrundeliegenden Ausführungsbeispiel vergrößert gezeichnet. Vorteilhafterweise kommt man dann mit nur einem Motor, vorzugsweise einem Hydromotor, und mit nur einem Getriebe für die Bewegung des Ladegurts in Be- und Entladerichtung aus, wenn das Getriebe, wie im vorliegenden Ausführungsbeispiel, verstellbar und wahlweise mit der Seiltrommel 7a oder der Wickeltrommel 3b verbindbar ist. Diese Verbindung kann, wie es z.B. in der Fig. 3 schematisch dargestellt ist, durch ein Zahnrad auf einer schwenkbaren Welle hergestellt sein, wobei das Zahnrad jeweils mit einem Zahnkranz auf den Trommeln in Eingriff bringbar ist. Denkbar wären aber auch Kettenantriebe mit wahlweise umschaltbaren Kupplungen.

Ein wesentlicher Vorteil dieser kompakt ausgeführten Antriebseinheit besteht darin, daß sie weitgehend vorgefertigt montiert werden kann, was den gesamten Einbau der Be- und Entladevorrichtung wesentlich erleichtert.

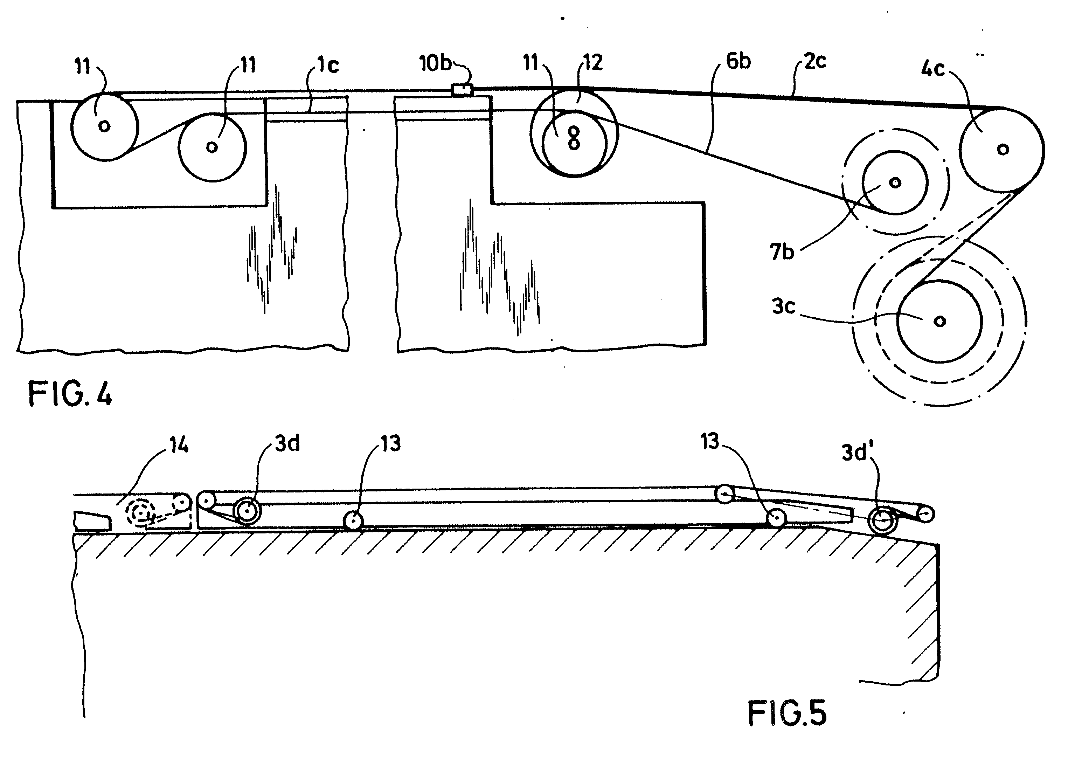

Bei dem in der Fig. 4 dargestellten Ausführungsbeispiel, das schematisch eine Be- und Entladevorrichtung, die mit einer Laderampe verbunden ist, zeigt, erfolgt wie beim Ausführungsbeispiel gemäß der Fig. 3 die Bewegung des Ladegurts 2c in Entladerichtung durch Aufwickeln des über die Umlenkwalze 4c geführten Ladegurts 2c auf die Wickeltrommel 3c, während der Gurt in Beladerichtung durch Aufwickeln des über den Gurtbalken 10b mit dem Ende des Ladegurts bzw. den Enden der Teillängsgurte verbundenen Zugseils 6b, das über die Umlenkrollen 11 geführt ist, auf die Seiltrommel 7b bewegt wird. Das Seil ist in einem Kanal im Ladeboden 1c zur Antriebseinheit zurückgeführt, hierfür könnte zur Erleichterung des nachträglichen Einbaus auf einer Laderampe aber auch eine Nut in der Auflagefläche auf der Unterseite des Ladegurts vorgesehen sein. Im vorliegenden Ausführungsbeispiel ist die durch die Umlenkwalze 4c gebildete Ladekante zusammen mit einem Teil des Ladebodens zur Anpassung an unterschiedliche Ladehöhen vertikal schwenkbar, wobei eine Schwenkung des Ladegurts 2c um die Stützwalze 12 erfolgt.

Bei den Ausführungsbeispielen gemäß den Fig. 3 und 4 braucht die Längsteilung des Ladegurts nicht vollständig zu sein. An den durch den Gurtbalken versteiften Enden kann der Ladegurt längs der Laderichtung auf einer Länge, die etwa dem Abstand zwischen der Wickeltrommel und der Umlenkwalze entspricht, durchgehend sein.

Fig. 5 zeigt ein Ausführungsbeispiel für eine Be- und Entladevorrichtung mit zwei Wickeltrommeln 3d und 3d′ und verschwenkbarer Ladekante, die mit einem Wagen mit Rädern 13 zum Einsatz an verschiedenen Orten verbunden ist, wie er z.B. für den innerbetrieblichen Transport auf Stückgutumschlagplätzen zur Erleichterung der Beladungs- und Transportarbeiten einsetzbar wäre. Das von einem Lastkraftwagen mit einer erfindungsgemäßen Be-und Entladevorrichtung an einer Laderampe angelieferte Stückgut könnte durch einen derartigen Wagen, an den ein weiterer Wagen 14 zur Verlängerung der Ladefläche gereiht sein könnte, direkt übernommen und weitertransportiert werden.

## Ansprüche

1. Vorrichtung zum Be- und Entladen von Stückgütern, insbesondere für Lastkraftwagen, mit einem sich auf einem Ladeboden (1) abstützenden Ladegurt (2), mit wenigstens einer Trommel (3) zum Aufwickeln des Ladegurts (2), und mit Antriebseinrichtungen zum Verschieben des Ladegurts (2) über den Ladeboden (1) in der Be- und Entladerichtung, **dadurch gekennzeichnet,** daß der Ladegurt (2) in wenigstens zwei im Abstand voneinander verlaufende Teillängsgurte (2a′, 2a″, 2a‴) unterteilt ist, und daß die Antriebseinrichtung für die Trommel (3) zum Aufwickeln des Ladegurtes (2) von außen wenigstens in einem freien Bereich zwischen zwei Teillängsgurten an der Trommel (3) angreift.

2. Vorrichtung nach Anspruch 1, **dadurch gekennzeichnet,** daß der Ladegurt in drei Teillängsgurte (2a′, 2″, 2a‴) unterteilt ist.

3. Vorrichtung nach Anspruch 2, **dadurch gekennzeichnet,** daß der mittlere Teillängsgurt (2a″) breiter als einer der beiden seitlichen Teillängsgurte (2a′, 2a‴) ist.

4. Vorrichtung nach Anspruch 2 oder 3, **dadurch gekennzeichnet,** daß die Breite der seitlichen Teillängsgurte (2a′, 2a‴) gleich groß ist.

5. Vorrichtung nach einem der Ansprüche 1 bis 4, **dadurch gekennzeichnet,** daß der Ladegurt über eine Umlenkwalze (4) geführt ist.

6. Vorrichtung nach Anspruch 5, **dadurch gekennzeichnet,** daß die Umlenkwalze (4) im Bereich (5a, 5b) zwischen zwei Teillängsgurten einen vergrößerten Durchmesser aufweist.

7. Vorrichtung nach einem der Ansprüche 1 bis 6, **dadurch gekennzeichnet,** daß eine zweite Trommel (4a′) zum Aufwickeln des Ladegurts (2a) in der Beladerichtung vorgesehen ist.

8. Vorrichtung nach einem der Ansprüche 1 bis 6, **dadurch gekennzeichnet,** daß eine Seiltrommel (7) zum Aufwickeln von wenigstens einem Seil (6) vorgesehen ist, das über einen Gurtbalken (10) mit einem Ende der Teillängsgurte (2a′, 2a″, 2a‴) verbunden ist.

9. Vorrichtung nach Anspruch 8, **dadurch gekennzeichnet,** daß das Seil (6) jeweils über wenigstens eine Umlenkrolle (11) geführt ist.

10. Vorrichtung nach einem der Ansprüche 7 bis 9, **dadurch gekennzeichnet,** daß als Antriebseinrichtung ein Motor (8) mit einem Getriebe (9) vorgesehen ist, und daß das Getriebe derart verstellbar ist, daß es wahlweise mit einer der beiden Trommeln (3a, 3a') zum Aufwickeln des Ladegurts, bzw. mit der Seiltrommel (7) oder mit der Trommel (3b, 3c) zum Aufwickeln des Ladegurts in Be-bzw. Entladerichtung verbindbar ist.

11. Vorrichtung nach einem der Ansprüche 1 bis 10, **dadurch gekennzeichnet,** daß für die Antriebseinrichtungen u.a. wenigstens ein Hydromotor vorgesehen ist.

12. Vorrichtung nach einem der Ansprüche 1 bis 11, **dadurch gekennzeichnet,** daß der Ladeboden wenigstens an einem Ende einen verschwenkbaren Bereich zur Anpassung an unterschiedliche Ladehöhen aufweist.

13. Vorrichtung nach einem der Ansprüche 1 bis 12, **dadurch gekennzeichnet,** daß der Ladeboden auf einem innerbetrieblichen Transportwagen installiert ist.

FIG. 1

FIG. 2

4a, 4a'    5a    5b

6a    10a    8a    2b    1b    4b

6a

7a

9a

3b

FIG. 3

EP 0 343 518 A1

FIG. 4

FIG.5

EP 0 343 518 A1

| | EINSCHLÄGIGE DOKUMENTE | | EP 89108979.9 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP - A2 - 0 173 936 (FUDICKAR METALL GMBH) * Anspruch 9; Fig. 2,3 * -- | 1 | B 60 P 1/36 |
| A | DE - A1 - 3 204 320 (AMAZONENWERKE H. DREYER GMBH & CO) * Zusammenfassung; Fig. 1 * -- | 1 | |
| A | DE - A1 - 3 434 102 (SCHÜCHEN) * Fig. 1,2 * ---- | 1 | |

RECHERCHIERTE
SACHGEBIETE (Int. Cl.4)

B 60 P
B 65 G 67/00

Der vorliegende Recherchenbericht wurde für alle Patentansprüche erstellt.

| Recherchenort | Abschlußdatum der Recherche | Prüfer |
|---|---|---|
| WIEN | 05-09-1989 | PISSENBERGER |